# EUROPEAN PATENT SPECIFICATION

(11) **EP 2 868 207 B1**
(45) Date of publication and mention of the grant of the patent: **01.03.2017**
(21) Application number: 13789052.1
(22) Date of filing: 15.04.2013
(51) Int. Cl.: A23L 17/30, A23B 4/005, A23B 4/023, A23B 4/06

(54) **METHOD FOR PRESERVING OVULATED STURGEON ROE**
VERFAHREN ZUR KONSERVIERUNG VON OVULIERTEM STÖRROGEN
PROCÉDÉ DE CONSERVATION D' UFS OVULÉS D'ESTURGEON

(43) Date of publication of application: 06.05.2015
(73) Proprietor: Koryazova, Irina Lvovna, Moscow 107392 (RU); Kopilenko, Liliya Rafalievna, 107392 Moscow (RU)
(72) Inventor: Koryazova, Irina Lvovna, Moscow 107392 (RU); Kopilenko, Liliya Rafalievna, 107392 Moscow (RU)
(74) Representative: Hermann, Felix
(86) International application number: PCT/RU2013/000319
(87) International publication number: WO 2014/171846

(56) References cited:
- FR-A1- 2 620 308
- US-A- 4 181 739
- DATABASE WPI Week 200438 Thomson Scientific, London, GB; AN 2004-408361 XP002718052, & RU 2 226 351 C1 (SOVA V V) 10 April 2004 (2004-04-10)
- DATABASE WPI Week 200617 Thomson Scientific, London, GB; AN 2006-162034 XP002718053, & RU 2 268 624 C1 (PACIFIC FISHING IND RES CENTRE) 27 January 2006 (2006-01-27)

## Description

The invention relates to the fishing industry, namely to the conservation of the sturgeon roe obtained in the intravital method.

Sturgeon caviar is one of the best fish delicacies due to its taste properties and nutritive values.

Since the mid-90's in conditions of drastic reduction of natural reserve of sturgeon the upcoming trend - growing of sturgeon in aquaculture conditions started to develop (Chebanov, Savelyeva, 1998; Vasilyeva, 1998; Ivanov et al., 1995; Kokoza et al., 1995; Ivanov, 2000; Podushka, 200; Gluschenko, 2000; 2001; Bagrov, Voronin, 2003; Burtsev, Nikolayev, 2004).

Nowadays by means of artificial rearing and growing in aquaculture it is possible to partially compensate the reduction and complete disappearance of valuable species of fish populations.

This activity occurred well before the sturgeon crisis. Measures for preservation of sturgeon as a national asset were taken, biology of fish was studied and the first steps in the artificial rearing of sturgeon were made in Russia from of old.

The use of the valuable sturgeon meat for food purposes significantly provides rather high efficiency of commercial sturgeon culture, the wide range of products of excess demand made of sturgeon meat have been produced for hundreds of years. But highest value both economic and consumer has the sturgeon caviar.

The opportunity of intravital obtaining of ovulated roe evenly throughout the year occurs when keeping the sturgeon population in controlled conditions of aquaculture (Burtsev, 1999; Chebanov, Savelyeva, 1998; Vdovichenlco, Rozhdestvenskiy, 1999). In order to obtain the roe from the female sturgeon repeatedly, the method of intravital obtaining of ovulated sturgeon roe was developed in the 70s and improved later (Burtsev, 1969; 1972; 1979; Podushka, 1986; Burtsev, Nikolayev et al., 1999).

This method allows for obtaining of roe over her life which in total 1-2 times exceeds her own weight (Burtsev et al., 1999; Andrianov, Burtsev et al., 2004).

Until recently ovulated roe was used for reproduction only.

In the past two decades, volumes of sturgeon growing in Russia and abroad increased significantly, and number of fish farms which are focused on the production of caviar, faced the problem of production of food roe from ovulated roe.

A number of fundamental differences between the properties of this roe and of that obtained after the slaughter of female did not allowed for its use for food purposes. The fact is that the ovulated roe is on the maturity stage V and, unlike the stage IV cannot be processed according to traditional technology. Attempts to develop a technology of obtaining of food sturgeon roe from ovulated roe were undertaken over the past two decades.

As it is known, the traditional technology of sturgeon caviar production provides female slaughter, ovary extraction, screening and salt curing of the roe (Zaytsev V.P., et al., 1964). However, the traditional technology of roe salt curing proved to be unacceptable for obtaining of the food caviar made from ovulated roe obtained in intravital method. The surface of ovulated roe in water is protected by the layer of internal fluid, which insulates the roe from external influence (Ginsburg, 1968). The use of a scanning electronic microscope to study the nature of stickiness of roe membrane made it possible to convincingly show that the stickiness of the outer jelly-like layer of the roe membrane is the property of its surface (Markov, 1978).

According to visual-tactile characteristics: color, shape and elasticity the obtained in intravital method in the first two stages basically has good quality. The roe of the third elutriation in some cases is weak, sometimes with the presence of blood and differs from the first portion according to brighter color, weak texture and size.

Since the process of roe ovulation for individual roe from different parts of ovary runs at different speeds, their state of maturity at the time of roe obtaining is different, with the result that in some cases it is possible to find different roe of one female - from small dark roe to large light ones.

The results of our observations are consistent with earlier findings of other authors, who noted that ovulated roe is usually different in size and physiological state, not only in different individuals, but also in the same ones (Detlaf, Ginsburg, 1954; Detlaf et al., 1981). The presence of different in size ovulated roe of one and the same female is the common feature of fish. The phenomenon of different quality of roe is caused by hereditary features, environment, and feeding, non-simultaneous maturation of ovarian, methods and timing of roe obtaining (Lebedev, 1959; Lebedev and Zheng Zheng-dun, 1963; Semenov, 1963; Faleyeva, 1965; 1970; Vladimirov, 1970; Badenko et al., 1973; Slutskiy, 1980; Zhukinskiy, Gosh, 1988; Zhukinskiy, 1988; Chebanov, 2001).

The technology which allows to process the roe of the maturity stage V into high-quality roe food product, similar to sturgeon caviar, which was obtained in traditional way for hundreds of years and had long shelf life, is the missing link in the production-technological chain of commercial sturgeon culture, focused on the intravital obtaining of the roe. Together with intravital method of sturgeon roe obtaining and in the conditions of reducing reserves of sturgeons in natural reservoirs, such technology opens good prospects of further development of commercial sturgeon culture.

This invention relates to fish industry, namely to the conservation of sturgeon roe obtained in intravital method.

There is known method of preparation of sturgeon grain caviar, which provides washing of the roe after its screening from ovaries, salt curing and prepackaging (GOST 7442, TI No. 79 "Instruction on production of sturgeon caviar" of the Book of Technological Instructions on Fish Processing, volume 2, 1994). This method cannot be used for processing of ovulated roe due to its resorption during water washing.

There is known method of preparation of sturgeon caviar, which consists in the fact that ovulated roe, kept on the water bath up to the temperature of 60-66°C for 5 minutes and then wash with cold water. However, this method provides stability of the product for one month (see SU 1827784).

There is known method of processing of ovulated sturgeon roe before the salt curing which includes obtaining of the roe, washing it with water heated up to the temperature providing heating of the roe during the washing up to the temperature of 70-90°C (see RU 2056759). However the proposed method contributes to significant compacting of the roe membrane which reduces the caviar quality.

There is known method of preparation of grain caviar from ovulated sturgeon roe which includes processing of collected ovulated roe in water solution, by means of addition of calcium chloride and peroxide (see US 2009/0246335 A1). However, it is known that calcium salts give bitter taste (Kopylenko, 2006).

There is known method of processing of ovulated sturgeon roe, which includes obtaining of the roe, its washing and processing before salt curing, flowing down, further washing characterized in that after obtaining the ovulated roe together with ovarian fluid is washed and processed with cooled colloid solution (hydrosol), the disperse phase of which is complex former and tanning substance, in addition food tannin is used as complex former and tanning substance (see RU 2462096).

However it is known that the sturgeon caviar has very delicate peculiar taste, and any substance, especially one that has tanning properties, has negative impact on the taste properties of the caviar, that is described in the works (Pavelyeva et al., 1987; Kopylenko, 2006).

There is known method of preparation of preserves from ovulated sturgeon roe, which consists in the fact that the sturgeon roe in the fifth stage of maturity, located in the ovarian fluid is immersed in a container with hot water for no more than 30 seconds, then the roe is thrown on the sieve for short flowing down. After the flowing down the roe is placed in container with the cold solution of conserving agent - sorbic acid at the temperature of 3±1°C, then the roe is salted and prepackaged in polymeric containers.

The disadvantages of this method include the following: processing of the roe together with the ovarian fluid, the mass of which has impact on the final temperature of the mixture, fixation of the grain before the salt curing that prevents distribution of salt in the roe due to compaction of the membrane and the use of conserving agent (RU 2268624).

RU 2 226 351 C1 relates to the production of granular salt salmon caviar fish species. The caviar is separated from the connective tissue of salmon roe by holding, under stirring, fresh and/or frozen, and/or salted roe in a saturated solution of sodium chloride at a concentration ratio of 1.0:0.5 to 1.0:1.0 for 0.5 to 5 minutes at a temperature of 0° to 20° C. Then hot water is added to the solution to reduce the concentration of a saturated solution of sodium chloride to 3.0-15% and increasing the temperature of the solution to 30° to 45° C. The roe is held in the resultant solution of 1 to 5 minutes and is then removed from the solution. Subsequently the roe is provided to an ozone-saturated solution of sodium chloride at a concentration of 10 to 15% and a temperature of 0° to -15° C.

US 4,181,739 related to processing of loose roe of Atlantic herring which comprises soaking the loose herring roe in three to five stages in salt solutions having different concentrations ranging from at least 2% in the initial stage to the saturation level in the final stage and forming by cohesion the loose roe into a product of a desired shape.

FR 2620308 A1 relates to a preparation of fish eggs, which is similar to caviar, an in which herring eggs preserved in the salted state. Female herrings are opened in order to remove therefrom the pouches which contain the eggs. The removed eggs are immersed in brine for a period sufficient for them to be impregnated with this brine. Thereafter, they are removed from the brine and then drained before being introduced into preserving containers.

The closest to the claimed technical solution is the method of obtaining of the caviar from ovulated sturgeon roe, which includes obtainment of the roe, thermal processing, standing, water washing, flowing down, salt curing and prepackaging, moreover there is provided additional flowing down after the thermal processing which is made by means of the hot 1.5-2% aqueous solution of the conserving agent, which provides the heating of the roe up to the temperature of 67-69°C, with further standing for 2.5-3 min, addition of fat emulsion mixture with conserving agent in the amount of 2-3% after roe salt curing, whereby sorbic acid or mixture of conserving agents is used as conserving agent (The RU 2232523). However preservation of the roe quality is provided by the processing of the roe with the conserving agent solution or heat processing after prepackaging of the caviar.

The technical result achieved using the claimed method may be expressed in the simplification of the obtaining of the finished product from the ovulated sturgeon roe that meets the requirements of quality and safety, as well as in improvement of the quality which is the closest to the quality of the caviar produced according to the traditional technology.

The technical result is achieved in the method of technological process of the ovulated sturgeon roe, which includes obtaining of the roe, its separation from the ovarian fluid, salt curing, flowing down and prepackaging, where the roe is put on the sieve with the layer height of at least 10 cm before the salt curing, and salt curing is carried out for at least 4-6 minutes by means of sequential immersion of the sieve with the roe in the containers with saline solution of density from 1.15-1.17 to 1.07-1.09 kg/m³ and temperature from 68°-65° to 45°-40°C for each container, with further processing with water of temperature not exceeding 10°C, in this case the flowing down is carried out after each immersion of the sieve with the roe in the saline solution or water. The finished prepackaged product is not pasteurized.

The method provides minimum contact of the roe with the surface of the auxiliary equipment during processing and salt curing that is why it differs from all described methods. Time and temperature regimes of the roe processing with saline solution are selected with the expectation that the caviar protein retains balanced amino acid composition which is characteristic for the caviar proteins of the maturity stage IV, and the density of the saline solution provides taste properties, which are close to the caviar, produced according to the traditional technology.

The advantage of this method is the absence of conserving agents in the finished products and the elimination of pasteurization phase in the technological chain of the caviar production. Method is carried out as follows.

The ovulated roe is obtained from the sturgeon females by intravital method, this roe is of the maturity stage V and it is not situated in the ovary but freely flows out of the fish. The obtained roe is separated from the ovarian fluid on the sieve. Then it is put on the sieve with the layer height of at least 10 cm - such layer will not violate the salt curing process and preserve the consistency of the roe. Then the saline solutions with preset temperature and density are prepared for each container. Sieve with the roe is sequentially immersed in the containers with the saline solutions and flowing down is carried out after each immersion. Salt curing is carried out for 4-6 minutes. The density of the saline solutions prepared for each container is from 1.15-1.17 to 1.07-1.09 kg/m³ and the temperature is from 68°- 65° to 45°-40°C. After the salt curing the roe is processed with water of temperature of not more than 10° C and then it is passed for flowing down. The finished roe is prepackaged under the vacuum in the consumer containers. Shelf life of the caviar at the temperature from minus 2° to minus 4°C exceeds the shelf life specified in the requirements of GOST 7442 for the grain caviar without conserving agents - 2.5 months.
Example 1. Ovulated roe of the maturity stage V is taken from the sturgeon females. The roe is separated from the ovarian fluid on the sieve. Then, before the salt curing, the roe is put on the sieve with the layer height of at least 10 cm. Then the saline solutions with preset temperature of 68° and 45° C and density of 1.15 and 1.09 kg/m³ are prepared for each container. The sieve with the roe is sequentially immersed in the containers with the saline solutions and flowing down is carried out after each immersion. The salt curing is carried out for 6 minutes. After the salt curing the roe is processed with water of temperature of 10°C, then it is passed for flowing down.
   The finished product has the appearance, color, taste and fine texture which are common for the grain caviar. The caviar is prepackaged under the vacuum in the consumer containers. The shelf life of the grain caviar at the temperature from minus 2° to minus 4°C exceeds the shelf life specified in the requirements of GOST 7442-2002 "Grain sturgeon caviar" without conserving agents - 2.5 months.
Example 2. Ovulated roe of the maturity stage V is taken from the sturgeon females. The roe is separated from the ovarian fluid on the sieve. Then, before the salt curing, the roe is put on the sieve with the layer height of at least 10 cm. Then the saline solutions with preset temperature of 65° and 40° C and density of 1.17 and 1.09 kg/m³ are prepared for each container. The sieve with the roe is sequentially immersed in the containers with the saline solutions and flowing down is carried out after each immersion. The salt curing is carried out for 4 minutes. After the salt curing the roe is processed with water of temperature of 10° C, then it is passed for flowing down.
   The finished product has the organoleptic indicators which are common for the grain caviar. The caviar is prepackaged under the vacuum in the consumer containers. The shelf life of the grain caviar at the temperature from minus 2° to minus 4°C exceeds the shelf life specified in the requirements of GOST 7442-2002 "Grain sturgeon caviar" without conserving agents - 2.5 months.
Example 3. Ovulated roe of the maturity stage V is taken from the sturgeon females. The roe is separated from the ovarian fluid on the sieve. Then, before the salt curing, the roe is put on the sieve with the layer height of at least 10 cm. Then the saline solutions with preset temperature of 65° and 45° C and density of 1.17 and 1.07 kg/m³ are prepared for each container. The sieve with the roe is sequentially immersed in the containers with the saline solutions and flowing down is carried out after each immersion. The alt curing is carried out for 5 minutes. After the salt curing the roe is processed with water of temperature of 10° C, then it is passed for flowing down.

The appearance, color, odor, texture and taste of the caviar correspond to the grain sturgeon caviar. The finished roe is prepackaged under the vacuum in the consumer containers. The shelf life of the grain caviar at the temperature from minus 2° to minus 4°C exceeds the shelf life specified in the requirements of GOST 7442-2002 "Grain sturgeon caviar" without conserving agents - 2.5 months.

## Claims

1. The method of conservation of ovulated sturgeon roe including obtaining of the roe, salt curing, flowing down and prepackaging, **characterized in that** before the salt curing the roe is separated from the ovarian fluid on the sieve, then it is put on the sieve with the layer height of not more than 10 cm, and the salt curing is carried out for 4-6 minutes by sequential immersion of the sieve with the roe in the containers with saline solution of density of 1.15-1.17 and 1.07-1.09 kg/m³ and temperature of 68°-65° and 45°-40°, followed by the processing with water at a temperature of not higher than 10°C, whereby flowing down is carried out after each immersion of the sieve with the roe in the saline solutions and processing.

## Patentansprüche

1. Verfahren zur Konservierung von ovuliertem Störrogen, umfassend Erhalten des Rogens, Behandeln mit Salz, Herunterlaufenlassen und Vorverpacken, **dadurch gekennzeichnet, dass** der Rogen vor dem Behandeln mit Salz auf dem Sieb von dem Ovarialfluid getrennt wird, dann mit einer Schichthöhe von nicht mehr als 10 cm auf das Sieb aufgebracht wird und die Behandlung mit Salz 4 bis 6 Minuten lang durch aufeinander folgendes Tauchen des Siebs mit dem Rogen in die Behälter mit Salzlösung einer Dichte von 1,15 kg/m³ bis 1,17 kg/m³ und 1,07 kg/m³ bis 1,09 kg/m³ und einer Temperatur von 68°C bis 65°C und 45°C bis 40°C durchgeführt wird, gefolgt vom Verarbeiten mit Wasser bei einer Temperatur von nicht mehr als 10°C, wobei man nach jedem Tauchen des Siebs mit dem Rogen in die Salzlösungen und Verarbeiten den Rogen herunterlaufen lässt.

## Revendications

1. Procédé de conservation d'oeufs ovulés d'esturgeon incluant l'obtention des oeufs, le salage, l'écoulement et le préemballage, **caractérisé en ce qu'**avant le salage, les oeufs sont séparés du liquide ovarien sur le tamis, puis ils sont placés sur le tamis avec une hauteur de couche d'au plus 10 cm, et le salage est réalisé pendant 4 à 6 minutes par immersion successive du tamis contenant les oeufs dans les récipients contenant une solution saline d'une densité de 1,15 à 1,17 et de 1,07 à 1,09 kg/m³ et d'une température de 68° à 65° et de 45° à 40°, ce qui est suivi du traitement à l'eau à une température maximale de 10 °C, moyennant quoi l'écoulement est réalisé après chaque immersion du tamis contenant les oeufs dans les solutions salines et traitement.
